# EUROPEAN PATENT SPECIFICATION

(11) **EP 4 140 680 B1**
(45) Date of publication and mention of the grant of the patent: **03.07.2024**
(21) Application number: 22189603.8
(22) Date of filing: 09.08.2022
(51) Int. Cl.: B29B 17/02, B08B 9/08, B29L 31/00

(54) **EXTRACTOR MACHINE FOR REMOVING A METERING VALVE FROM CONTAINERS**
ENTNAHMEMASCHINE ZUM ENTNEHMEN EINES DOSIERVENTILS AUS BEHÄLTERN
MACHINE D'EXTRACTION POUR ENLEVER UNE VALVE DOSEUSE DE RÉCIPIENTS

(30) Priority: 24.08.2021 IT 202100022268
(43) Date of publication of application: 01.03.2023
(73) Proprietor: Gruppo Bertolaso S.p.A., 37040 Zimella (VR) (IT)
(72) Inventor: MAZZON, Giovanni, 37047 Lobia Di San Bonifacio (VR) (IT); URBANI, Luca, 36040 Sossano (VI) (IT); STELLA, Gianluca, 36025 Noventa Vicentina (VI) (IT)
(74) Representative: Gallo, Luca

(56) References cited:
- EP-A1- 3 133 044
- EP-A1- 3 455 144
- DE-A1- 2 941 888
- FR-A1- 2 535 699
- Anonymous: "How to Remove an Alcohol Bottle Stopper: 8 Steps (with Pictures)", , 12 May 2021 (2021-05-12), pages 1-3, XP055917364, Retrieved from the Internet: URL:https://www.wikihow.com/Remove-an-Alco hol-Bottle-Stopper [retrieved on 2022-05-03]

## Description

### Field of application

The present invention relates to an extractor machine for removing a metering valve from containers, according to the preamble of the main independent claim.

The machine in question relates, in particular, to the field of liquid container recycling, and is intended to be used to remove the metering valve from containers, such as bottles for food-grade liquids, such as, for example, oil, vinegar, spirits, etc.

More in detail, the extractor machine in question may be preferably installed in a system for recycling used containers, between a decapping machine, which is arranged for removing the caps from the aforesaid used containers, and a security ring removing machine.

### Background art

The industrial bottling systems conventionally available on the market provide for the transit of the bottles to be bottled through several operating machines placed in series and usually comprising at least one rinsing machine, a filling machine and a capping machine. Conventionally, the aforesaid industrial bottling systems involve filling, from time to time, containers which have never been previously used.

However, to date, the need is felt to reuse liquid containers, in particular glass bottles, both for reducing the environmental impact as well as for reducing the costs associated with the production of the containers themselves.

Container recycling systems, which are installed upstream of a conventional bottling system and comprise at least one decapping machine, which is arranged for removing the caps from the containers to be reused, as well as a security ring removing machine, are therefore known in the reference sector.

Such systems also comprise at least one or more machines for washing and sterilizing the containers, which are arranged for removing dirt and residues from the containers themselves and make them suitable for receiving a liquid food.

However, the container recycling systems briefly described up to now have proved to be not free from drawbacks in practicing the invention.

In particular, such systems are adapted at most to recycle and supply to the downstream bottling system only bottles which are already without metering valves, such as, for example, wine bottles, but are not adapted to supply to the bottling systems containers which are provided at the mouth thereof with a metering valve, such as for, example, oil or vinegar bottles.

In fact, the presence of the metering valve prevents the air return tube of the filling machine of the bottling system from being inserted inside the container itself, so as to remove the air from the inside of the container as the latter is filled with liquid.

Therefore, in order to be able to recycle bottles with metering valves (for example, oil or vinegar bottles), in some production plants, the operation for removing the metering valve from the mouth of the corresponding container is performed manually, resulting in long production times and the need for increased manpower.

To manually remove the metering valve from the mouth of a bottle, it is possible to use the method described on the web page "How to remove an Alcohol Bottle Stopper: 8 Steps (with pictures)" which is available at the link https://www.wikihow.com/Remove-an-Alcohol-Bottle-Stopper. In particular, such method involves inserting the blade of a knife between the coupling collar of the metering valve (the coupling collar partially wrapping the neck of the bottle at the mouth of the bottle itself and being engaged with undercuts made circumferentially around the aforesaid neck) and the tubular casing which covers such coupling collar and part of the neck of the bottle, so as to cut and remove the aforesaid tubular casing and leave the coupling collar of the metering valve exposed. Furthermore, the aforesaid method involves using the same knife to break the frangible flaps obtained on the coupling collar of the metering valve, the frangible flaps, once broken, allowing the coupling collar to be deformed so that the metering valve is disengaged from the undercuts of the bottle neck and so that it may be slipped off the neck of the bottle itself. Differently, in order to automate the removal of the metering valves from the neck of the bottles, a metering valve equipped with at least one rupture line, which extends circumferentially along the coupling collar, and an extractor machine configured so as to break the coupling collar of the metering valve at said rupture line and thus causing the aforesaid metering valve to fall from the neck of the corresponding bottle are known from European patent EP 3455144.

In particular, the extractor machine according to the prior art comprises a removal head provided with a main support body, two circular blades and two arms carrying each mounted thereon a corresponding circular blade. More in detail, the aforesaid arms are movable between a disengagement position, in which the circular blades mounted thereon are moved away from each other in order to allow the insertion of the neck of a bottle between the blades themselves, and an operating position, in which the circular blades mounted thereon are brought close and arranged at the rupture line of the coupling collar of the metering valve. Furthermore, such extractor machine is equipped with movement means arranged for rotating the main support body of the removal head to ensure that the circular blades, when the arms are in the operating position, sever the coupling collar of the metering valve along the rupture line and that the part of the metering valve extending above the rupture line falls from the neck of the bottle.

However, the extractor machine according to the prior art has proved to be not free from drawbacks in practicing the invention.

In particular, such extractor machine is not capable of removing the entire metering valve from the neck of the bottle in a single operation but only the part of metering valve above the rupture line. In fact, the annular portion of the coupling collar which is located below the rupture line remains on the neck of the bottle and it is therefore necessary to use a further cutting head equipped with a blade capable of cutting the aforesaid residual annular portion, the further cutting head making the extractor machine complicated and expensive. Furthermore, the aforesaid extractor machine of the known type is adapted to remove only metering valves equipped with coupling collars which wrap the neck of the bottle externally and which are engaged with undercuts obtained on said neck, but it is not adapted to remove metering valves of another type, such as, for example, those inserted to fit in the opening of the neck of the bottle and therefore without a coupling portion.

### Presentation of the invention

In this situation, the issue underlying the present invention is to obviate the drawbacks of the prior art, by providing an extractor machine for removing a metering valve from containers, which allows the metering valves to be removed in an automated manner from the containers themselves.

It is a further obj ect of the present invention to provide an extractor machine for removing a metering valve from containers, which allows the metering valves to be recycled once they have been removed from the containers.

It is a further obj ect of the present invention to provide an extractor machine for removing a metering valve from containers, which is capable of operating in a versatile manner as the format of the containers from which the metering valves are to be removed vary.

It is a further obj ect of the present invention to provide an extractor machine for removing a metering valve from containers, which is structurally simple and economical to make.

It is a further obj ect of the present invention to provide an extractor machine for removing a metering valve from containers, which is operationally fully efficient and reliable.

### Brief description of the drawings

The technical features of the invention, according to the aforesaid objects, are clearly verifiable from the content of the claims reported below and the advantages thereof will become more evident in the following detailed description, made with reference to the accompanying drawings, which represent an embodiment thereof given exclusively by way of explanation and not by way of limitation, in which:

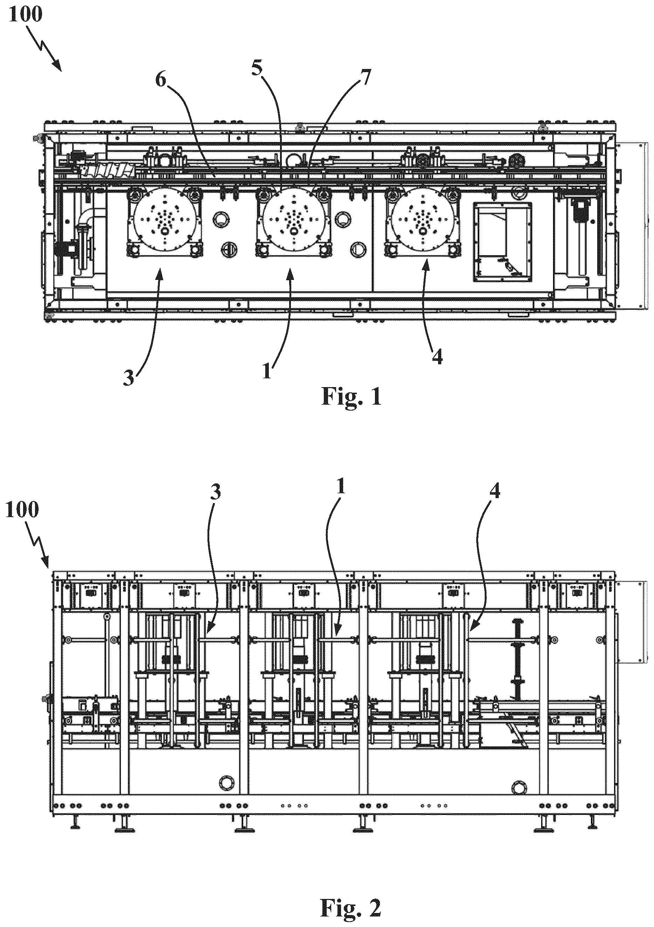

- Figure 1 shows a side view of an embodiment of a container recycling system, in which an extractor machine object of the present invention is installed;
- Figure 2 shows a plan view of the system of Figure 1;
- Figure 3 shows a side sectional view of the extractor machine object of the present invention, in accordance with a preferential embodiment;
- Figure 4 shows a side sectional view of an extraction head of the extractor machine of Figure 3;
- Figure 5 shows a sectional side view of a gripper of the extraction head of Figure 4;
- Figure 6 shows a sectional view of the gripper of Figure 5, taken along the line VI-VI of Figure 3;
- Figure 7 shows a side sectional view of a detail of the gripper of the extraction head of the extractor machine of Figure 3, in which the gripper is shown with jaws in a closed configuration;
- Figure 8 shows a side sectional view of a detail of the gripper of the extraction head of the extractor machine of Figure 3, in which the gripper is shown with jaws in an open configuration.

### Detailed description of a preferred embodiment

With reference to the accompanying drawings, numeral 1 indicates as a whole an extractor machine, for removing a metering valve 2 from containers, object of the present invention. More in detail, the extractor machine 1 object of the present invention is advantageously intended to be used in a system for recycling containers 100, for example, bottles of oil, vinegar or spirits, to remove therefrom a corresponding metering valve 2 and thus allow the containers themselves to be reused.

In a completely conventional manner, the containers generally consist of bottles made of glass, PET or other materials and comprise a lower enlarged body from which an elongated neck extends at the top, ending at the top with a head equipped with a mouth, which is susceptible of being traversed by the liquid both at the inlet and at the outlet of the container itself and carries a metering valve 2 inserted therein.

In particular, the extractor machine 1 in question is preferably arranged in the container recycling system 100 downstream of a decapping machine 3, which is arranged for removing the caps from the corresponding containers, and upstream of a security ring removing machine 4.

Possibly, the aforesaid container recycling system 100 is provided with one or more machines for washing and sterilizing the containers (not shown), for example, downstream of the security ring removing machine 4, which are arranged for removing dirt and residues from the containers themselves, in particular to make them adapted to be refilled with liquid food by a conventional bottling system.

Advantageously, the extractor machine 1 is equipped with an inlet section 5, at which it receives the containers from which to remove the metering valve 2. Such containers come, for example, from the decapping machine 3 of the container recycling system 100 in which the extractor machine 1 is installed and are transported to the inlet section 5 of the extractor machine 1 itself by a conveyor belt 6 or by other means of transport of the known type, not described in detail.

Furthermore, the extractor machine 1 is preferably equipped with an outlet section, at which it releases the containers from which the metering valve 2 has been removed, in particular at a conveyor belt 6, adapted to convey such containers to a security ring removing machine 4 of the container recycling system.

With reference to the accompanying Figures, the extractor machine 1 comprises a fixed support structure 8, which is preferably intended to be placed on the ground. Furthermore, the extractor machine 1 in question comprises at least one extraction head 10, which is mounted on the fixed support structure 8 and is provided with at least one gripper 11 comprising a support body 12 and two jaws 13.

The aforesaid jaws 13 are mechanically connected in a guided manner to the support body 12 and each comprise a gripping portion 14.

The extraction head 12 also comprises movement means 15 arranged at least for moving the jaws 13 between a closed configuration, in which the gripping portions 14 are brought close to each other in order to cross the metering valve 2, and an open configuration, in which the gripping portions 14 are moved away from each other in order to mechanically engage the metering valve 2.

More in detail, below, the expression "mechanically connected in a guided manner", with reference to the jaws 13, means that the aforesaid jaws 13 may be slidably connected to the support body 12 or rotatably connected to such support body 12 or provided with both movements, indifferently.

Therefore, in the case in which the jaws 13 are slidably connected to the support body 12, the movement means 15 are preferably arranged for moving the jaws 13 between the closed configuration and the open configuration, thus translating the aforesaid jaws 13.

For example, in accordance with a first embodiment variant of the gripper 11, not shown in the accompanying figures, the support body 12 is equipped with a guide, having, in particular, a rectilinear extension, the jaws 13 are each equipped with a shoe slidably associated with the aforesaid guide and carrying the corresponding gripping portion 14 mounted thereon, and the first movement means 15 are arranged for translating the shoes of the jaws 13 along the guide of the support body 12, thus causing the jaws 13 to move between the closed configuration and the open configuration.

Differently, in the case in which the jaws 13 are rotatably connected to the support body 12, the movement means 15 are preferably arranged for moving the jaws 13 between the closed configuration and the open configuration by rotating the aforesaid jaws 13. Operationally, when the movement means 15 move the jaws 13 in closed configuration, the gripping portions 14 may be easily inserted crossing a through opening 67 of the metering valve 2. Furthermore, preferably, when the movement means 15 move the jaws 13 in open configuration, following the insertion of the gripping portions 14 into the through opening 67 of the metering valve 2, the gripping portions 14 mechanically engage the metering valve 2 itself, so that, by moving the extraction head 10 and the container away from each other, the metering valve 2 is held by the gripper 11 and therefore extracted from the mouth of the container itself.

In order to insert the gripping portions 14 of the jaws 13 crossing the metering valve 2 and to remove the aforesaid metering valve 2 from the corresponding container after the jaws 13 have been moved in open configuration, the extraction head 10 advantageously comprises at least one movable support body 55, which carries a corresponding gripper 11 mounted thereon and is slidably associated with the fixed support structure 8 along a movement direction W thereof between a lifted position and a lowered position, and actuator means 40, which are mechanically connected to the movable support body 55 and arranged for moving it between the lifted position and the lowered position.

More in detail, the movable support body 55 may carry the corresponding gripper 11 "directly" or "indirectly" mounted, i.e., by means of other components of the extraction head 10 itself which are mounted on the movable support body 55 and carrying the gripper 11 itself mounted in turn.

In particular, operatively, when the jaws 13 are in closed configuration, the movable support body 55 is moved along the movement direction W by the actuator means 40 from the lifted position to the lowered position to insert the gripping portions 14 crossing the metering valve 2 of a container maintained in position below the extraction head 10. Furthermore, operatively, after the gripping portions 14 have been inserted crossing the metering valve 2, the jaws 13 are moved in open configuration by the movement means 15 so that the gripping portions 14 mechanically engage the metering valve 2 and the actuator means 40 move the movable support body 55 along the movement direction W from the lowered position to the lifted position so that the gripper 11 mounted on the movable support body 55 itself is moved away from the container and therefore removes the metering valve 2 from the mouth thereof.

In accordance with the preferential and non-limiting embodiment shown in the accompanying figures, the extractor machine 1 in question advantageously comprises a rotary carousel 9, which is rotatably mounted on the fixed support structure 8 around a rotation axis X, and a plurality of extraction heads 10, which are peripherally mounted on the rotary carousel 9 around the rotation axis X to complete an operating path around the latter.

More in detail, the arrangement of a rotary carousel 9 and of several extraction heads 10 on the extractor machine 1 in question allows the metering valves 2 to be removed from a large quantity of containers within short time intervals.

In particular, the rotation axis X of the rotary carousel 9 has a vertical extension and the operating path of the extraction heads 10 extends around the aforesaid rotation axis X from the inlet section 5 to the outlet section 7.

More in detail, the rotary carousel 9 is actuatable to rotate around the aforesaid rotation axis X by suitable actuation means, which are known to those skilled in the art and are therefore not described in detail below.

Advantageously, the aforesaid extraction heads 10 are peripherally arranged on the rotary carousel 9 angularly equally distributed.

Preferably, the fixed support structure 8 comprises at least one support shaft 61 and the rotary carousel 9 comprises at least one rotation tube 62, which is rotatably mounted on the aforesaid support shaft 61 and carries at least one first transport disk 63 fixed therein, on which the aforesaid extraction heads 10 are mounted.

Furthermore, the extractor machine 1 in question preferably comprises support means 64 peripherally mounted on the rotary carousel 8 around the rotation axis X and adapted to support the containers from which the metering capsules 2 are to be removed along the operating path from the inlet section 5 to the outlet section 7.

In particular, the support means 64 preferably comprise a second transport disk 65, which is fixed to the rotation tube 62 of the rotary carousel 9 below the first transport disk 63, and several support plates 66 mounted on such second transport disk 65 and each aligned to a corresponding extraction head 10.

Advantageously, the jaws 14 are rotatably connected to the support body 12, each around a hinging axis Y thereof, and the movement means 15 are arranged for rotating the jaws 13 between the closed configuration and the open configuration.

Obviously, in this case, rotation means a component of rotation of any movement, for example of pure rotation or roto-translation, to which the jaws 13 of the gripper 11 may be subj ected.

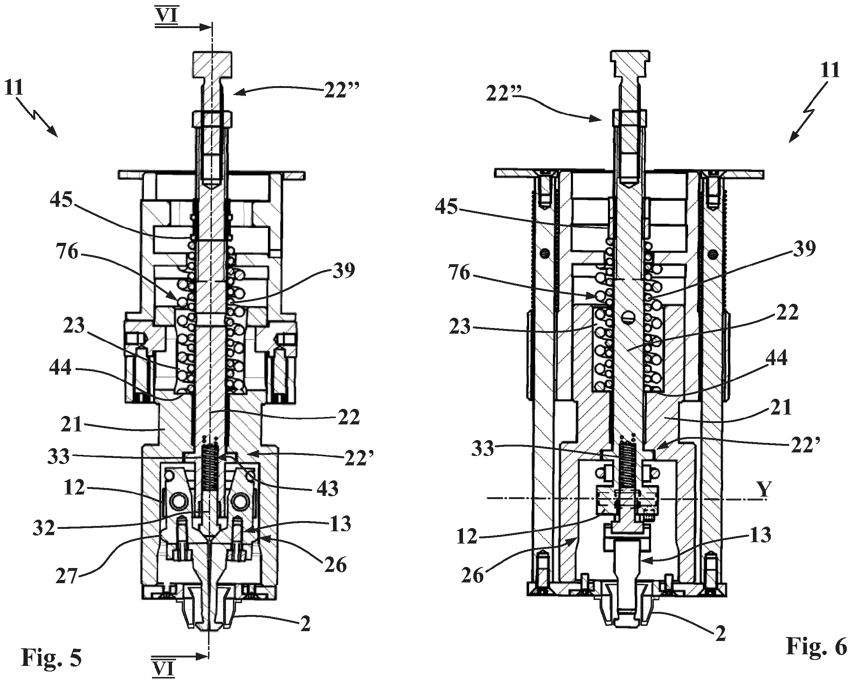

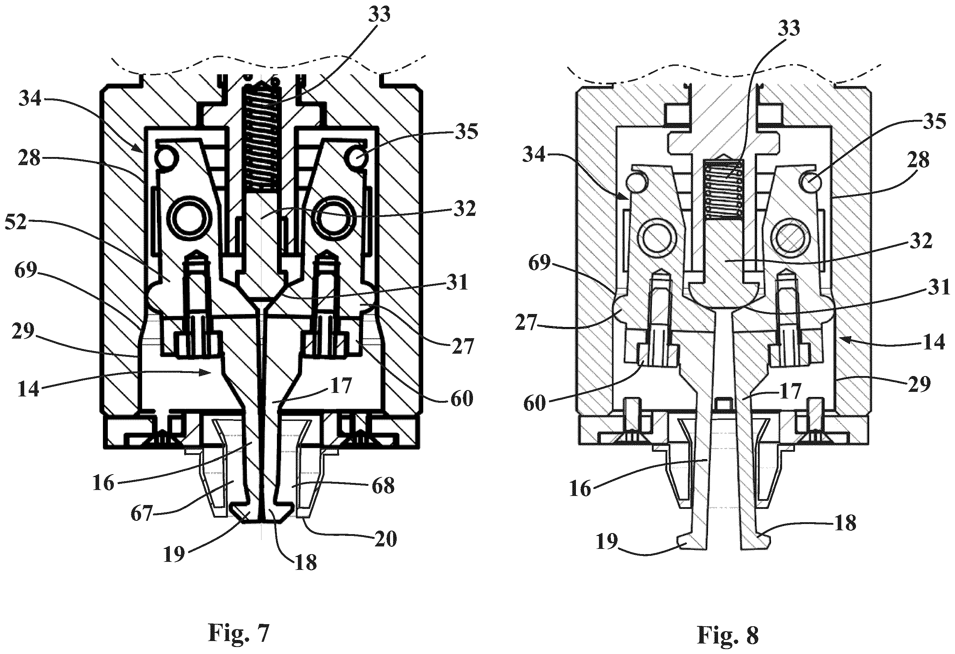

In accordance with the preferential embodiment, as shown in particular in Figures 5 to 8, the jaws 13 are arranged side by side and are rotatably connected to the support body 12 around corresponding hinging axes Y parallel to each other.

In accordance with a second embodiment variant of the gripper 11 not shown in the accompanying Figures, each jaw 13 comprises an eyelet aligned to the eyelet of the other jaw and crossed by a common hinging pin fixed to the support body 12, so that the aforesaid jaws 13 are rotatably connected to the support body 12 around corresponding hinging axes Y coinciding with each other.

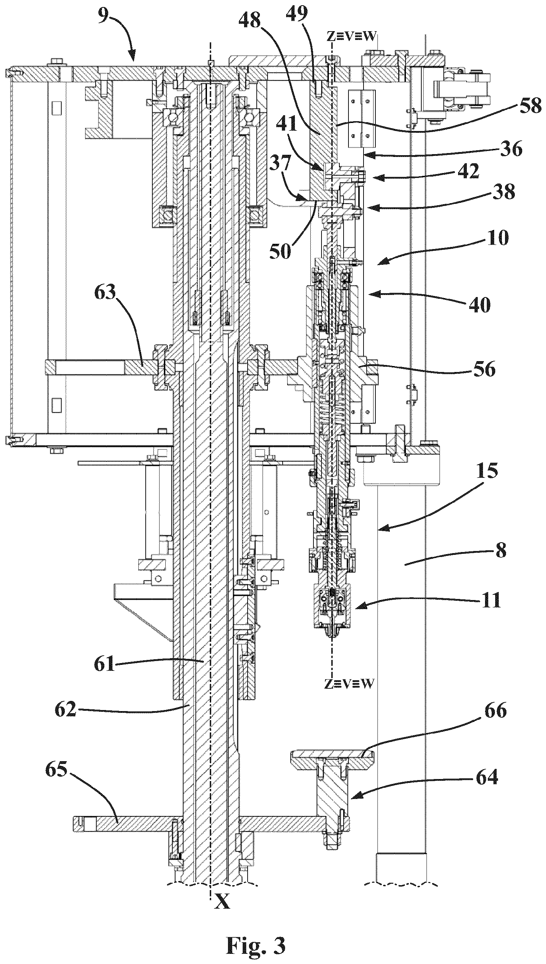

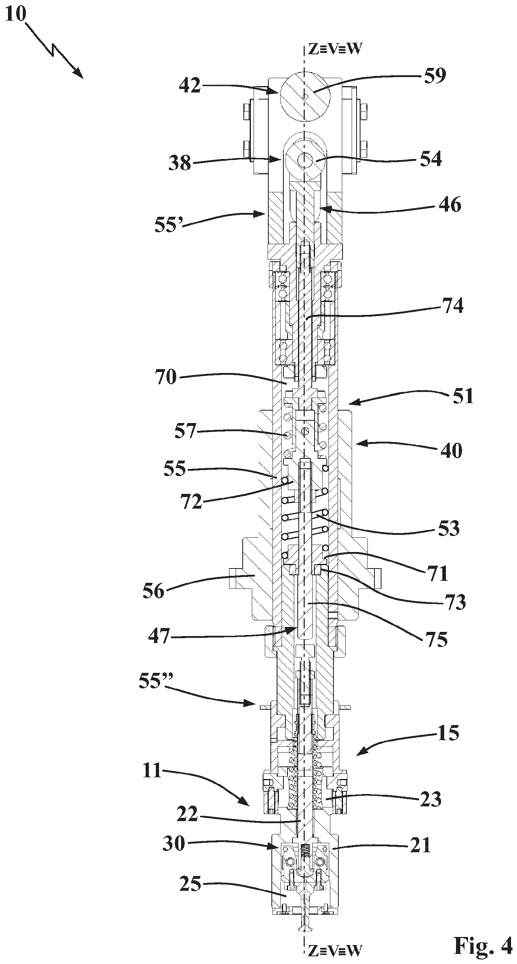

In accordance with the preferential embodiment, as shown in particular in Figures 3 and 4, the movable support body 55 of each extraction head 10 is slidably mounted on the rotary carousel 9 along the movement direction W thereof between the lifted position and the lowered position, the movement direction W being substantially parallel to the rotation axis X of the rotary carousel 9.

Therefore, since the movable support body 55 is advantageously slidably mounted on the rotary carousel 9 and the rotary carousel 9 is rotatably mounted on the fixed support structure 8, the movable support body 55 is advantageously slidably associated with the fixed support structure 8 itself by means of the rotary carousel 9 itself.

Advantageously, below, the expressions "lifted position" and "lowered position" are meant with reference to the orientation of the extractor machine 1 shown in the accompanying Figure 3, or are meant with reference to an extractor machine 1 object of the invention having the rotation axis X of the rotary carousel 9 arranged substantially vertical.

In particular, the rotary carousel 9 is advantageously equipped with several support sleeves 56, which are mounted on the first support disk 63 and each carries slidably inserted therein the movable support body 55 of a corresponding extraction head 10 along the movement direction W.

More in detail, the movable support body 55 of each extraction head 10 extends along an extension direction thereof, advantageously substantially coinciding with the movement direction W, between an upper end 55' and an opposite lower end 55", at which the corresponding gripper 11 is preferably mounted with the gripping portions 14 of the jaws 13 thereof facing downwards.

More in detail, in the lifted position, the gripper 11 mounted on the movable support body 55 is arranged spaced apart from the support means 64, so that the gripper 11 itself is arranged spaced apart from the metering valve 2 of the corresponding container supported by the support means 64, and, in the lowered position, the gripper 11 is arranged close to the support means 64 and substantially at the mouth of the corresponding container from which to remove the metering capsule 2, so that the gripping portions 14 of the gripper 11 are inserted inside the through opening 67 of the metering valve 2 itself.

Operatively, in order to remove the metering valve 2 from the corresponding container, it is sufficient, first, for the movement means 15 to rotate the jaws 13 in closed configuration and for the actuator means 40 to translate the movable support body 55 from the lifted position to the lowered position, so that the gripping portions 14 brought close to each other are inserted into the through opening 67 of the metering valve 2 of a container preferably supported by the support means 64 below the corresponding extraction head 10. Furthermore, subsequently, it is sufficient for the movement means 15 to rotate the jaws 13 in open configuration and for the actuator means 40 to translate the movable support body 55 of the extraction head 10 from the lowered position to the lifted position, so that the gripping portions 14 interfere at least with an inner surface 68 of the metering valve 2 delimiting the aforesaid through opening 67 laterally, and for the gripper 11 to be moved away from the mouth of the container so as to remove the metering valve 2 therefrom. Furthermore, the extractor machine 1 in question advantageously comprises unloading means (not shown) operatively connected to the at least one extraction head 10 and arranged for receiving from the gripper 11 the metering valve 2 removed from the container and to convey, away from the extraction head itself 10, the aforesaid metering valve 2. More in detail, the unloading means comprise an ejection chute extending between a receiving end, which is placed to intercept the operating path between the inlet section 5 and the outlet section 7 and is susceptible of receiving the metering valves 2 removed from the extraction heads 10, transported by the rotary carousel 9 along the aforesaid operating path, and an opposite unloading end, which is placed below with respect to the receiving end, so that the metering valves 2 slide on the ejection chute itself by gravity, and is, for example, connected to a collection compartment.

Operatively, after the movable support body 55 has been moved by the actuator means 40 from the lowered position to the lifted position to remove the metering valve 2 from the container supported by the support means 64, the extraction head 10 is transported by the rotary carousel 9 along the operating path until it intercepts the receiving end of the ejection chute, at which the movement means 15 of the gripper 11 move the jaws 13 in closed configuration to make the metering valve 2 fall onto the ejection chute. Advantageously, each gripping portion 14 of the aforesaid jaws 13 comprises an elongated stem 16, which preferably extends between a first end 17, facing the corresponding hinging axis Y, and an opposite second end 18.

Furthermore, each gripping portion 14 advantageously comprises a projection 19, extended protruding from the elongated stem 16 in order to couple the metering valve 2 with the jaws 13 in open configuration and to uncouple the metering valve 2 with the jaws 13 in closed configuration.

In particular, the projection 19 of the gripping portion 14 is substantially arranged at the aforesaid second end 18 of the elongated stem 16 itself.

More in detail, the projection 19 of each gripping portion 14 is intended to abut against a lower edge 20 of the metering valve 2, once the gripping portions 14 are placed crossing the metering valve 2 itself (in particular, the through opening 67 thereof) and the jaws 13 are moved in open configuration.

Preferably, the gripping portions 14 of the jaws 13 each comprise a coupling part 52 rotatably connected to the support body 12 of the gripper 11 and carrying, for example by means of removable fixing means 60, the corresponding elongated stem 16 removably mounted, so that the elongated stems 16 with the projections 19 thereof may be easily replaced in order to adapt the gripper 11 itself to metering valves 2 to be removed of different sizes.

Preferably, each extraction head 10 comprises at least one support tube 21 carrying the gripper 11 mounted thereon and, furthermore, the movement means 15 advantageously comprise at least one actuation shaft 22, which is slidably associated with the aforesaid support tube 21 along a first actuation direction Z, in particular, parallel to the rotation axis X of the rotary carousel 9.

In particular, the support tube 21 is internally provided with a first sliding seat 23 and the actuation shaft 22 is slidably inserted in such first sliding seat 23.

More in detail, the aforesaid actuation shaft 22 is movable, along the first actuation direction Z, between an engagement position, in which the jaws 13 of the gripper 11 are in open configuration, and a disengagement position, in which the jaws 13 are in closed configuration.

In accordance with the preferential embodiment, the support tube 21 is mounted on the movable support body 55 of the corresponding extraction head 10 at the lower end 55".

Therefore, in particular, since the support tube 21 carries the gripper 11 mounted thereon and since it is itself mounted on the movable support body 55, the movable support body 55 itself preferably carries the gripper 11 "indirectly" mounted through the support tube 21. In particular, the support tube 21 is mounted on the aforesaid movable support body 55 with the actuation shaft 22 having the first actuation direction Z thereof substantially coinciding with the movement direction W of the movable support body 55 itself.

In more detail, furthermore, the support tube 21 is slidably mounted on the movable support body 55 along a direction substantially coinciding with the movement direction W of the movable support body 55 itself and the extraction head 10 comprises a shock-absorbing spring 57 mechanically connected to the movable support body 55 and to the support tube 21.

Thereby, when the movable support body 55 is moved from the lifted position to the lowered position to insert the gripping portions 14 of the jaws 13 of the corresponding gripper 11 into the metering valve 2, and the support tube 21 abuts against the mouth of the container on which the metering valve 2 is arranged, the shock-absorbing spring 57 is susceptible of elastically yielding in order to allow the support tube 21 to translate with respect to the movable support body 55, thus preventing the impact of the support tube 21 against the mouth of the container from damaging the container itself and/or the movable support body 55.

Furthermore, the support tube 21 of each extraction head 10 is advantageously provided with at least one guide seat 25, inside which the gripper 11 is at least partially housed. More in detail, such guide seat 25 communicates with the first sliding seat 23, so that the actuation shaft 22 may act at least on the jaws 13 of the gripper 11 to move them between the closed configuration and the open configuration by translating between the disengagement position and the engagement position, respectively.

In accordance with the first embodiment variant of the gripper 11 not shown, the gripper 11 itself comprises elastic return means, which are mechanically connected to the jaws 13 and are arranged for forcing them into the closed configuration with the gripping portions 14 close to each other, and the actuation shaft 22 is movable between the disengagement position, in which it is spaced apart from the jaws 13, and the engagement position, in which it interferes with the shoes of the jaws 13 to move the jaws 13 themselves in open configuration, causing the shoes to translate along the guide of the support body 12 and moving away from each other the gripping portions 14 mounted on the shoes. Differently, in accordance with the preferential embodiment, the gripper 11 is advantageously actuatable to translate within the aforesaid guide seat 25 by the actuation shaft 22 between an operating position, with the actuation shaft 22 in the engagement position, and a non-operating position, with the actuation shaft 22 in the disengagement position.

More in detail, at least in the operating position of the gripper 11, the gripping portions 14 of the jaws 13 protrude from the guide seat 25 of the support tube 21, in particular downward.

Preferably, the gripper 11 is actuatable to translate between the operating position and the non-operating position along a second actuation direction V, which, in particular, is substantially coinciding with the first actuation direction Z of the corresponding actuation shaft 22 and, therefore, in turn, substantially coinciding with the movement direction W of the movable support body 55 and substantially parallel to the rotation axis X of the rotary carousel 8.

More in detail, in the non-operating position, the gripper 11 is arranged raised along the corresponding second actuation direction V and, in the operating position, the gripper 11 is arranged lowered along the same second operating direction V, so that in the passage from the non-operating position to the operating position, the insertion of the gripping portions 14 inside the metering valve 2 is facilitated and, in particular, so that the projection 19 of each gripping portion 14 is brought below the lower edge 20 of the metering capsule 2. In order to directly transmit the motion from the actuation shaft 22, which is movable between the engagement position and the disengagement position, to the gripper 11, which is movable between the operating position and the non-operating position, respectively, the actuation shaft 22 is preferably fixed to the support body 12 of the gripper 11 itself. Even more preferably, furthermore, the actuation shaft 22 and the support body 12 of the corresponding gripper 11 are obtained in a single body, as shown in particular in Figure 6. Advantageously, the movement means 15 comprise at least one cam profile 26, which extends inside the guide seat 25 of the support tube 21. Furthermore, the jaws 13 of the gripper 11 each comprise a first cam follower 27 thereof, which is coupled to the cam profile 26 itself.

In particular, the aforesaid cam profile 26 is arranged for switching, by means of the first cam followers 27, the jaws 13 between the closed configuration, with the gripper 11 arranged in the non-operating position, and the open configuration, with the gripper 11 arranged in the operating position.

Thereby, the actuation shaft 22, translating between the disengagement position and the engagement position, causes the gripper 11 itself to translate between the non-operating position and the operating position, respectively, and, therefore, also causes the first cam followers 27 of the jaws 13 to slide on the cam profile 26 to switch them between the closed configuration and the open configuration.

More in detail, the first cam followers 27 are laterally extended protruding from each gripping portion 14 of the corresponding jaw 13, in particular along a direction transverse to the hinging axes Y.

Furthermore, preferably, the cam profile 26 comprises two first sections 28, facing each other and placed at a first distance, and two second sections 29, facing each other and placed at a second distance, the second distance being greater than the first distance.

In particular, the gripper 11 in non-operating position is arranged between the first sections 28, susceptible of maintaining, through the first cam followers 27, the jaws 13 in closed configuration. Furthermore, advantageously, the gripper 11 in operating position is arranged between the second sections 29, which are susceptible of maintaining, through the first cam followers 27 themselves, the jaws 13 in open configuration.

Advantageously, the cam profile 26 comprises an inclined leading section 69, which is placed as a connection between each first section 28 and the adjacent second section 29, so that the passage of the first cam followers 27 from the first sections 28 to second sections 29 during the movement of the gripper 11 by the actuation shaft 22 is facilitated.

More in detail, the first sections 28 of the cam profile 26 are arranged above the second sections 29, so that, in the non-operating position, the gripper 11 is arranged raised with the first cam followers 27 coupled to the first sections 28, and that, in the operating position, the gripper 11 is arranged lowered with the first cam followers 27 coupled to the second sections 29.

Thereby, when the actuation shaft 22 is moved from the disengagement position to the engagement position, the gripper 11 is actuated to translate within the guide seat 25 from the non-operating position to the operating position (i.e., in particular, vertically, from above downward), so that the first cam followers 27 slide along the cam profile 26 passing from the first sections 28 to the second sections 29, which are placed at a second distance which is greater with respect to the first distance of the first sections 28, in order to allow the gripping portions 14 of the jaws 13 to move away from each other and, therefore, to pass from the closed configuration to the open configuration.

Similarly, in particular, when the actuation shaft 22 is moved from the engagement position to the disengagement position, the gripper 11 is actuated to translate within the guide seat 25 from the operating position to the non-operating position (i.e., in particular, vertically, from below upward), so that the first cam followers 27 slide along the cam profile 26 passing from the second sections 29 to the first sections 28, which are placed at a first distance which is lesser with respect to the second distance of the second sections 29, in order to force the gripping portions 14 of the jaws 13 to move in mutual approaching and, therefore, to pass from the open configuration to the closed configuration.

In order to facilitate the production of the support tube 21 and of the cam profile 26 inside the guide seat 25 thereof, the guide seat 25 itself is preferably provided with a narrow portion, which has a substantially cylindrical extension, is equipped with a corresponding first diameter which is equal to the first distance between the first sections 28 and on which the aforesaid first sections 28 extend, and with an enlarged portion, which in turn has a substantially cylindrical extension, is equipped with a corresponding second diameter which is equal to the second distance between the second sections 29 and on which the aforesaid second sections 29 extend.

Preferably, the movement means 15 comprise at least one elastic element 30, which is connected to the jaws 13, is arranged for forcing the jaws 13 themselves towards the open configuration and is susceptible of elastically yielding, with the gripper 11 in non-operating position, in order to allow the jaws 13 to pass from the open configuration to the closed configuration.

Thereby, the cam followers 27 of the jaws 13 are always maintained pressed against the cam profile 26 and, when the gripper 11 is placed in the operating position, the elastic element 30 maintains the cam followers 27 of the jaws 13 in abutment against the second sections 29 to force the jaws 13 themselves in open configuration, and, when the gripper 11 is placed in the non-operating position, the elastic element 30 elastically yields in order to allow the cam followers 27 to pass from the second sections 29 to the first sections 28, pushing the gripping portions 14 in mutual approaching and therefore passing the jaws 13 in closed configuration.

In accordance with the preferential embodiment (in which the jaws 13 are rotatably connected to the support body 12 around corresponding hinging axes Y), the gripping portions 14 of the jaws 13 of the gripper 11 comprise at least one abutment section 31 and, furthermore, the movement means 15 advantageously comprise at least one pusher body 32, which is slidable with respect to the support body 12 of the gripper 11 between an interference position, in which the pusher body 32 maintains, acting in abutment against the abutment sections 31, the jaws 13 rotated in open configuration, and a non-interference position, in which the pusher body 32 allows the jaws to rotate in closed configuration. More in detail, the aforesaid elastic element 30 comprises a thrust spring 33, which is mechanically connected at least to the pusher body 32, is arranged for forcing the pusher body 32 itself towards the interference position and is susceptible, with the gripper 11 in non-operating position, of elastically yielding under the action of the abutment sections 31 in order to allow the pusher body 32 to pass from the interference position to the non-interference position.

In particular, the actuation shaft 22 extends, along the first actuation direction Z thereof, between a first end 22' and an opposite second end 22". At the aforesaid first end 22', a housing seat 43 is preferably obtained, which carries the thrust spring 33 and, at least partially, the pusher element 32 housed therein.

More in detail, the pusher element 32 comprises a guiding stem at least partially inserted in the housing seat 43, so that the pusher element 32 itself is slidably guided between the interference position and the non-interference position by the housing seat 43, and an abutment head, which is arranged outside the housing seat 43 and is maintained in abutment against the abutment section 31 of both gripping portions 14 of the jaws 13, under the action of the thrust spring 33.

Thereby, when the gripper 11 is in the operating position, the thrust spring 33 maintains the pusher element 32 in the interference position, so that the jaws 13 are forced, by means of the abutment sections 31, to rotate towards the open configuration until the first cam followers 27 thereof abut against the second sections 29.

Furthermore, in particular, when the gripper 11 is in the non-operating position, the first cam followers 27 are arranged between the first sections 28 and, therefore, push the gripping portions 14 of the jaws 13 in mutual approaching, the abutment sections 31 of such gripping portions 14 in turn push the pusher element 32 towards the non-interference position with the thrust spring 33 elastically yielding.

Advantageously, the jaws 13 of the gripper 11 each comprise a lever portion 34, which extends from the corresponding hinging axis Y in an opposite direction with respect to the aforesaid gripping portion 14.

In particular, the lever portion 34 is obtained in a single body with the coupling part 52 of the gripping portion 14 of the corresponding jaw 13.

Advantageously, the elastic element 30 comprises, alternatively or in addition to the thrust spring 33, at least one elastic ring 35, which is placed to connect the lever portions 34 of the jaws 13, is arranged for forcing such lever portions 34 in mutual approaching in order to bring the jaws 13 in open configuration and is susceptible, with the gripper 11 in non-operating position, of elastically yielding in order to allow said lever portions 34 to be moved away from each other.

Thereby, when the gripper 11 is in the operating position, the elastic ring 35 maintains the lever portions 34 close to each other, so that the jaws 13 are maintained rotated in the open configuration with their first cam followers 27 abutting against the second sections 29. Furthermore, in particular, when the gripper 11 is in the non-operating position, the cam followers 27 are arranged between the first sections 28 and, therefore, push the gripping portions 14 of the jaws 13 in mutual approaching and the lever portions 34 away from each other, which therefore make the elastic ring 35 elastically yield.

More in detail, the elastic element 30 may comprise either only the thrust spring 33, which pushes the pusher element 32 towards the interference position and maintains the aforesaid pusher element 32 in abutment against the abutment sections 31 of the gripping portions 14, or only the elastic ring 35 placed to wrap the lever portions 34 or, as shown in the accompanying Figures, both the thrust spring 33 and the elastic ring 35, which therefore cooperate to push the jaws 13 in rotation from the closed configuration to the open configuration.

In accordance with the preferential embodiment, the extractor machine 1 advantageously comprises at least one fixed cam device 36 mounted on the fixed support structure 8 and having at least one first guide profile 37, which, in particular, extends around the rotation axis X of the rotary carousel 9.

More in detail, the movement means 15 of each extraction head 10 further comprise at least one second cam follower 38. Such second cam follower 38 is preferably operatively connected to the corresponding actuation shaft 22 and is engaged with the aforesaid first guide profile 37 of the fixed cam device 36, at least to bring the actuation shaft 22 itself from the disengagement position to the engagement position.

More in detail, when the rotary carousel 9 is actuated to rotate around the rotation axis X thereof, the extraction heads 10 are in turn rotated along the operating path with the second cam followers 38 coupled to the first guide profile 37 to move the actuation shafts 22 and therefore operate the grippers 11.

Advantageously, the movement means 15 comprise at least one transmission member 51, which is slidably inserted in a second sliding seat 70 obtained inside the movable support body 55 and extending along the extension direction of the movable support body 55 itself, is connected to the second cam follower 38 and to the actuation shaft 22 and is arranged for transmitting motion from the aforesaid second cam follower 38 to the actuation shaft 22. In particular, the second cam follower 38 of the movement means 15 preferably comprises a first follower roller 54 rotatably mounted on the transmission member 51 around a first revolution axis thereof, in particular, perpendicular to the rotation axis X of the rotary carousel 9 and to the extension direction of the movable support body 55 itself, and slidably associated with the first guide profile 37 of the fixed cam device 36.

More in detail, in order to allow the transmission member 51 to act on the actuation shaft 22 to move it, the first sliding seat 23 of the support tube 21, in which the actuation shaft 22 is slidably inserted, communicates with the second sliding seat of the movable support body 55, in which the transmission member 51 is slidably inserted.

In particular, the transmission member 51 extends along the extension direction of the movable support body 55 between an upper terminal portion 46 thereof, which is arranged substantially at the upper end 55' of the movable support body 55 and carries the second cam follower 38 mounted thereon, and an opposite lower end portion 47, which is susceptible of acting on the actuation shaft 22.

More in detail, such transmission member 51 is arranged for being moved by the second cam follower 38 to translate inside the second sliding seat 70 of the movable support body 55 at least between a first position, in which the lower terminal portion 47 is arranged spaced apart from the second end 22" of the actuation shaft 22, and a second position, in which the lower terminal portion 47 is arranged in abutment against the second end 22" of the actuation shaft 22 to push the actuator shaft 22 in the engagement position.

In order to cushion the impact between the transmission member 51 and the actuation shaft 22 when the transmission member 51 is brought into the second position with the lower terminal portion 47 thereof in abutment against the second end 22" of the actuation shaft 22, the transmission member 51 advantageously comprises a first rod 74 (in particular, ending above with the upper terminal portion 46), a second rod 75 (in particular, ending below with the lower terminal portion 47) aligned with the aforesaid first rod 74 along the extension direction of the movable support body 55 and an elastic shock-absorbing device 76 placed to mechanically connect the first rod 74 and the second rod 75 themselves.

In accordance with the preferred embodiment, as shown in particular in the accompanying

Figures 3 and 4, the fixed cam device 36 comprises a substantially cylindrical cam body 48, which extends along the rotation axis X of the rotary carousel 9 between an upper base 49, mechanically connected to the fixed support structure 8, and an opposite lower base 50, and is provided with an outer surface 58 extending between the aforesaid upper base 49 and the lower base 50.

More in detail, the fixed support structure 8 comprises a support plate mounted on the support shaft 61 above the first transport disk 63 of the rotary carousel 9 and carrying the aforesaid cam body 48 fixed therebelow.

Furthermore, as shown in the accompanying Figures 3 and 4, the first guide profile 37 is preferably obtained on the lower base 50 of the cam body 48.

Preferably, the movement means 15 further comprise at least one return spring 53, which is mechanically connected to the transmission member 51 and to the movable support body 55, is arranged for forcing the transmission member 51 towards the first position and is susceptible of elastically yielding under the action of the second cam follower 38 on the transmission member 51 in order to allow the aforesaid transmission member 51 to pass from the first position to the second position.

Thereby, the return spring 53 maintains the first follower roller 54 of the second cam follower 38 mounted on the transmission member 51 arranged in abutment against the first guide profile 37 extending on the lower base 50 of the cam body 48 of the fixed cam device 36.

In particular, the movable support body 55 comprises an abutment step 73, which is positioned inside the second sliding seat 70 and is provided with an abutment wall 71 thereof facing towards the upper terminal portion 46 of the transmission member 51, and the transmission member 51 carries mounted, for example keyed, a second abutment collar 72 facing the aforesaid abutment step 73. Preferably, the return spring 53 is arranged coaxial to the transmission member 51 and interposed pre-compressed between the abutment step 73, i.e., in particular, resting on the abutment wall 71, and the second abutment collar 72, to push the second abutment collar 72 away from the abutment step 73 itself, and therefore the transmission member 51 away from the second position towards the first position.

Advantageously, the movement means 15 comprise at least one return spring 39, which is mechanically connected to the actuation shaft 22 and to the support tube 21, is arranged for forcing the actuation shaft 22 itself towards the disengagement position and is susceptible of elastically yielding with the second cam follower 38 acting on the actuation shaft 22 (in particular, by means of the transmission member 51) in order to allow the actuation shaft 22 to pass from the disengagement position to the engagement position.

In particular, the support tube 21 comprises an abutment wall 44, which delimits at least the first sliding seat 23 and is provided with a through hole placed in communication with the guide seat 25 and crossed by the actuation shaft 22, and the actuation shaft 22 carries mounted, for example keyed, a first abutment collar 45 arranged inside the first sliding seat 23. Preferably, the return spring 39 is arranged coaxial to the actuation shaft 22 and interposed pre-compressed between the aforesaid abutment wall 44 and the first abutment collar 45 to push the first abutment collar 45 away from the abutment wall 44 itself and therefore the actuation shaft 22 from the engagement position to the disengagement position.

Preferably, the fixed cam device 36 comprises at least one second guide profile 41, which extends around the rotation axis X of the rotary carousel 9.

Preferably, the second guide profile 41 is obtained on the cam body 48 by means of a corresponding guide channel, which, in particular, extends as a depression on the outer surface 58 of the cam body 48 itself.

Furthermore, the actuator means 40 of each extraction head 10 comprising at least one third cam follower 42, which is mounted on the movable support body 55 and is engaged with the second guide profile 41 of the aforesaid fixed cam device 36 to carry the aforesaid movable support body 55 from the lifted position to the lowered position. Advantageously, the third cam follower 42 of the actuator means 40 preferably comprises a second follower roller 59, which is rotatably mounted on the corresponding movable support body 55 at the upper end 55', around a second revolution axis thereof, in particular perpendicular to the rotation axis X of the rotary carousel 9 and to the extension direction of the movable support body 55 itself.

Preferably, such second follower roller 59 of the third cam follower 42 is slidably inserted in the guide channel obtained as a depression on the outer surface 58 of the cam body 48, so that the movable support body 55 of the extraction head 10 is guided by the guide channel both from the lifted position towards the lowered position and from the lowered position towards the lifted position, without therefore requiring the provision of elastic return means.

The invention thus conceived therefore achieves the intended objects.

## Claims

1. Extractor machine for removing a metering valve (2) from containers, comprising:
- a fixed support structure (8);
- at least one extraction head (10) which is mounted on said fixed support structure (8) and comprises:
- at least one gripper (11), which comprises:
- a support body (12);
- two jaws (13), which are mechanically connected in a guided manner to said support body (12) and each comprise a gripping portion (14);
said extractor machine being **characterized in that** said extraction head (10) comprises movement means (15) arranged at least for moving said jaws (13) between a closed configuration, in which said gripping portions (14) are brought close to each other in order to cross said metering valve (2), and an open configuration, in which said gripping portions (14) are moved away from each other in order to mechanically engage said metering valve (2).

2. Extractor machine according to claim 1, **characterized in that** it comprises:
- a rotary carousel (9) rotatably mounted on said fixed support structure (8) around a rotation axis (X);
- a plurality of said extraction heads (10), which are peripherally mounted on said rotary carousel (9) around said rotation axis (X) in order to complete an operating path around said rotation axis (X).

3. Extractor machine according to claim 1 or 2 **characterized in that** said jaws (14) are rotatably connected to said support body (12), each around a hinging axis (Y) thereof; said movement means (15) being arranged for rotating said jaws (13) between said closed configuration and said open configuration.

4. Extractor machine (1) according to any one of the preceding claims, **characterized in that** the gripping portions (14) of the jaws (13) of said gripper (11) each comprise:
- an elongated stem (16);
- a projection (19) extended protruding from said elongated stem (16) in order to couple said metering valve (2) with said jaws (13) in open configuration and uncouple said metering valve (2) with said jaws (13) in closed configuration.

5. Extractor machine (1) according to any one of the preceding claims, **characterized in that** each said extraction head (10) comprises at least one support tube (21) carrying said gripper (11) mounted thereon and the movement means (15) of said extraction head (10) comprise at least one actuation shaft (22) slidably associated with said support tube (21) along a corresponding first actuation direction (Z) and movable, along said first actuation direction (Z), between an engagement position, in which the jaws (13) of said gripper (11) are in open configuration, and a disengagement position, in which the jaws (13) of said gripper (11) are in closed configuration.

6. Extractor machine (1) according to claim 5, **characterized in that** the support tube (21) of each said extraction head (10) is provided with at least one guide seat (25), within which said gripper (11) is at least partially housed;
said gripper (11) being actuatable to translate within said guide seat (25) by said actuation shaft (22) between an operating position, with said actuation shaft (22) in engagement position, and a non-operating position, with said actuation shaft (22) in disengagement position.

7. Extractor machine (1) according to claim 6, **characterized in that** the movement means (15) comprise at least one cam profile (26) extended within the guide seat (25) of said support tube (21) and the jaws (13) of said gripper (11) each comprise a first cam follower (27) thereof coupled to said cam profile (26);
said cam profile (26) being arranged for switching, through said first cam followers (27), said jaws (13) between said closed configuration, with said gripper (11) arranged in non-operating position, and said open configuration, with said gripper (11) arranged in operating position.

8. Extractor machine (1) according to claim 7, **characterized in that** said first cam followers (27) are laterally extended protruding each from the gripping portion (14) of the corresponding said jaw (13);
said cam profile (26) comprising two first sections (28) facing each other and placed at a first distance and two second sections (29) facing each other and placed at a second distance greater than said first distance;
said gripper (11) being arranged between said first sections (28) in non-operating position, which said first sections (28) are susceptible of maintaining, through said first cam followers (27), said jaws (13) in closed configuration;
said gripper (11) being arranged between said second sections (29) in operating position, which said second sections (29) are susceptible of maintaining, through said first cam followers (27), said jaws (13) in said open configuration.

9. Extractor machine (1) according to claim 8, **characterized in that** said movement means (15) comprise at least one elastic element (30) connected to saidjaws (13), arranged for forcing said jaws (13) towards said open configuration and susceptible of elastically yielding, with said gripper (11) in non-operating position, in order to allow said jaws (13) to pass from said open configuration towards said closed configuration.

10. Extractor machine (1) according to claims 3 and 9, **characterized in that** the gripping portions (14) of the jaws (13) of said gripper (11) comprise at least one abutment section (31) and said movement means (15) comprise at least one pusher body (32) slidable with respect to said support body (12) between an interference position, in which said pusher body (32) maintains, acting in abutment against said abutment sections (31), saidjaws (13) rotated in said open configuration, and a non-interference position, in which said pusher body (32) allows said jaws (13) to rotate in said closed configuration;
said at least one elastic element (30) comprising a thrust spring (33), which is mechanically connected at least to said pusher body (32), is arranged for forcing said pusher body (32) towards said interference position and is susceptible, with said gripper (11) in non-operating position, of elastically yielding under the action of said abutment sections (31) in order to allow said pusher body (32) to pass from said interference position to said non-interference position.

11. Extractor machine (1) according to claim 3 and claim 9 or 10, **characterized in that** the jaws (13) of said gripper (11) each comprise a lever portion (34) extended starting from the corresponding said hinging axis (Y) in an opposite direction with respect to the corresponding said gripping portion (14);
said at least one elastic element (30) comprising at least one elastic ring (35) placed to connect the lever portions (34) of said jaws (13), arranged for forcing the lever portions (34) of said jaws (13) in mutual approaching in order to bring said jaws (13) in open configuration and susceptible, with said gripper (11) in non-operating position, of elastically yielding in order to allow said lever portions (34) to be moved away from each other.

12. Extractor machine (1) according to claim 2 and any one of the claims from 5 to 11, **characterized in that** it comprises at least one fixed cam device (36) mounted on said fixed support structure (8) and having at least one first guide profile (37) extended around the rotation axis (X) of said rotary carousel (9);
the movement means (15) of each extraction head (10) comprising at least one second cam follower (38) operatively connected to the corresponding said actuation shaft (22) and engaged with the first guide profile (37) of said fixed cam device (36) at least in order to bring said actuation shaft (22) from the disengagement position to the engagement position.

13. Extractor machine (1) according to claim 12, **characterized in that** said movement means (15) comprise at least one return spring (39) mechanically connected to said actuation shaft (22) and to said support tube (21), arranged for forcing said actuation shaft (22) towards said disengagement position and susceptible of elastically yielding with said second cam follower (38) acting on said actuation shaft (22) in order to push it from said disengagement position towards said engagement position.

14. Extractor machine (1) according to any one of the preceding claims, **characterized in that** said at least one extraction head (10) comprises at least:
- a movable support body (55), which carries mounted thereon one said gripper (11) and is slidably associated with said fixed support structure (8) along a movement direction (W) thereof between a lifted position and a lowered position;
- actuator means (40) mechanically connected to said movable support body (55) and arranged for moving said movable support body (55) between said lifted position and said lowered position.

15. Extractor machine (1) according to claim 2 and claim 14, **characterized in that** the movable support body (55) of each said extraction head (10) is slidably mounted on the rotary carousel (9) along the said movement direction (W) thereof between said lifted position and said lowered position, and such movement direction (W) is substantially parallel to the rotation axis (X) of said rotary carousel (9).

## Patentansprüche

1. Entnahmemaschine zum Entnehmen eines Dosierventils (2) aus Behältern, umfassend:
- eine feste tragende Struktur (8);
- mindestens einen Entnahmekopf (10), der auf der genannten festen tragenden Struktur (8) montiert ist und Folgendes umfasst:
- mindestens einen Greifer (11), der Folgendes umfasst:
- einen Trägerkörper (12);
- zwei Spannbacken (13), die mechanisch und geführt mit dem genannten Trägerkörper (12) verbunden sind und jeweils einen Greifabschnitt (14) umfassen;
wobei die genannte Entnahmemaschine **dadurch gekennzeichnet ist, dass** der genannte Entnahmekopf (10) Bewegungsmittel (15) umfasst, die mindestens darauf ausgelegt sind, die genannten Spannbacken (13) zwischen einer geschlossenen Konfiguration, in der die genannten Greifabschnitte (14) aneinander angenähert sind, um das genannte Dosierventil (2) zu überqueren, und einer geöffneten Konfiguration, in der die genannten Greifabschnitte (14) voneinander entfernt sind, um das genannte Dosierventil (2) mechanisch in Eingriff zu bringen, zu verlagern.

2. Entnahmemaschine nach Anspruch 1, **dadurch gekennzeichnet, dass** sie Folgendes umfasst:
- ein Drehkarussell (9), das um eine Drehachse (X) herum drehbar an der genannten festen tragenden Struktur (8) montiert ist;
- eine Vielzahl der genannten Entnahmeköpfe (10), die außen auf dem genannten Drehkarussell (9) um die genannte Drehachse (X) herum montiert sind, um eine Arbeitsstrecke um die genannte Drehachse (X) zurückzulegen.

3. Entnahmemaschine nach Anspruch 1 oder 2, **dadurch gekennzeichnet, dass** die genannten Spannbacken (14) drehbar mit dem genannten Trägerkörper (12) verbunden sind, jede davon um eine eigene Scharnierachse (Y);
wobei die genannten Bewegungsmittel (15) darauf ausgelegt sind, die genannten Spannbacken (13) zwischen der genannten geschlossenen Konfiguration und der genannten geöffneten Konfiguration zu drehen.

4. Entnahmemaschine (1) nach einem beliebigen der vorangegangenen Ansprüche, **dadurch gekennzeichnet, dass** die Greifabschnitte (14) der Spannbacken (13) des genannten Greifers (11) jeweils Folgendes umfassen:
- einen länglichen Schaft (16);
- einen Vorsprung (19), der von dem genannten länglichen Schaft (16) auskragend verläuft, um das genannte Dosierventil (2) mit den genannten Spannbacken (13) in geöffneter Konfiguration anzukuppeln und das genannte Dosierventil (2) mit den genannten Spannbacken (13) in geschlossener Konfiguration abzukuppeln.

5. Entnahmemaschine (1) nach einem beliebigen der vorangegangenen Ansprüche, **dadurch gekennzeichnet, dass** jeder genannte Entnahmekopf (10) mindestens eine Stützmuffe (21) umfasst, die den genannten Greifer (11) und die Bewegungsmittel (15) des genannten Entnahmekopfes (10) montiert trägt, und mindestens eine Antriebswelle (22) umfasst, die mit der genannten Stützmuffe (21) entlang einer entsprechenden ersten Antriebsrichtung (Z) verschiebbar verbunden ist und, entlang der genannten ersten Antriebsrichtung (Z), zwischen einer ersten Eingriffsposition, in der die Spannbacken (13) des genannten Greifers (11) sich in geöffneter Konfiguration befinden, und einer gelösten Position, in der die Spannbacken (13) des genannten Greifers (11) sich in geschlossener Konfiguration befinden, beweglich ist.

6. Entnahmemaschine (1) nach Anspruch 5, **dadurch gekennzeichnet, dass** die Stützmuffe (21) jedes genannten Entnahmekopfes (10) mit mindestens einem Führungssitz (25) ausgestattet ist, in dessen Inneren der genannte Greifer (11) mindestens teilweise untergebracht ist;
wobei der genannte Greifer (11) von der genannten Antriebswelle (22) betätigt werden kann, um sich im Inneren des genannten Führungssitzes (25) zwischen einer Arbeitsposition, mit genannter Antriebswelle (22) in Eingriffsposition, und einer nicht operativen Position, mit genannter Antriebswelle (22) in gelöster Position, zu verschieben.

7. Entnahmemaschine (1) nach Anspruch 6, **dadurch gekennzeichnet, dass** die Bewegungsmittel (15) mindestens ein Nockenprofil (26) umfassen, das im Inneren des Führungssitzes (25) der genannten Stützmuffe (21) verläuft, und dass die Spannbacken (13) des genannten Greifers (11) jeweils einen eigenen, mit dem genannten Nockenprofil (26) gekuppelten ersten Nockenstößel (27) umfassen;
wobei das genannte Nockenprofil (26) darauf ausgelegt ist, über die genannten ersten Nockenstößel (27), die genannten Spannbacken (13) zwischen der genannten geschlossenen Konfiguration, mit in nicht operativer Position angeordnetem genannten Greifer (11), und der genannten geöffneten Konfiguration, mit in Arbeitsposition angeordnetem Greifer (11), umzuschalten.

8. Entnahmemaschine (1) nach Anspruch 7, **dadurch gekennzeichnet, dass** die genannten ersten Nockenstößel (27) jeweils seitlich auskragend von dem Greifabschnitt (14) der entsprechenden genannten Spannbacke (13) verlaufen;
wobei das genannte Nockenprofil (26) zwei erste einander gegenüberliegende und in einem ersten Abstand positionierte Abschnitte (28) und zwei zweite einander gegenüberliegende und in einem zweiten Abstand, der größer als der erste Abstand ist, positionierte zweite Abschnitte (29) umfasst;
wobei der genannte Greifer (11) zwischen den genannten ersten Abschnitten (28) in nicht operativer Position angeordnet ist, wobei diese ersten Abschnitte (28) geeignet sind, die genannten Spannbacken (13), über die genannten ersten Nockenstößel (27), in geschlossener Konfiguration zu halten;
wobei der genannte Greifer (11) zwischen den genannten zweiten Abschnitten (29) in Arbeitsposition angeordnet ist, wobei diese zweiten Abschnitte (29) geeignet sind, die genannten Spannbacken (13), über die genannten ersten Nockenstößel (27), in geöffneter Konfiguration zu halten;

9. Entnahmemaschine (1) nach Anspruch 8, **dadurch gekennzeichnet, dass** die genannten Bewegungsmittel (15) mindestens ein mit den genannten Spannbacken (13) verbundenes Federelement (30) umfassen, das darauf ausgelegt ist, die genannten Spannbacken (13) in die genannte geöffnete Konfiguration zu drücken und geeignet ist, mit genanntem Greifer (11) in nicht operativer Position, federnd nachzugeben, um es den genannten Spannbacken (13) zu gestatten, von der genannten geöffneten Konfiguration in die genannte geschlossenen Konfiguration zu wechseln.

10. Entnahmemaschine (1) nach Anspruch 3 und 9, **dadurch gekennzeichnet, dass** die Greifabschnitte (14) der Spannbacken (13) des genannten Greifers (11) mindestens einen Anschlagabschnitt (31) umfassen und die genannten Bewegungsmittel (15) mindestens einen Schubkörper (32) umfassen, der im Verhältnis zu dem genannten Trägerkörper (12) zwischen einer Sperrposition, in der der genannten Schubkörper (32) die genannten Spannbacken (13), indem er anschlagend gegen die genannten Anschlagabschnitte (31) wirkt, in die genannte geöffnete Konfiguration gedreht hält, und einer nicht sperrenden Position, in der der genannte Schubkörper (32) es den genannten Spannbacken (13) gestattet, in die genannte geschlossene Konfiguration zu drehen, verschiebbar ist; wobei das genannte mindestens eine Federelement (30) eine Druckfeder (33) umfasst, die mechanisch mindestens mit dem genannten Schubkörper (32) verbunden ist, darauf ausgelegt ist, den genannten Schubkörper (32) in Richtung der genannten Sperrposition zu drücken und geeignet ist, mit dem genannten Greifer (11) in nicht operativer Position, unter der Wirkung der genannten Anschlagabschnitte (31) federnd nachzugeben, um es dem genannten Schubkörper (32) zu gestatten, aus der genannten Sperrposition in die genannte nicht gesperrte Position zu wechseln.

11. Entnahmemaschine (1) nach Anspruch 3 und Anspruch 9 oder 10, **dadurch gekennzeichnet, dass** die Spannbacken (13) des genannten Greifers (11) jeweils einen Hebelabschnitt (34) umfassen, der ausgehend von der entsprechenden genannten Scharnierachse (Y) im Verhältnis zu dem entsprechenden genannten Greifabschnitt (14) in entgegengesetzter Richtung verläuft;
wobei das genannte mindestens eine Federelement (30) mindestens einen Federring (35) umfasst, der als Verbindung der Hebelabschnitte (34) der genannten Spannbacken (13) positioniert und darauf ausgelegt ist, die Hebelabschnitte (34) der genannten Spannbacken (13) in gegenseitige Annäherung zu drücken, um die genannten Spannbacken (13) in die geöffnete Konfiguration zu bringen, und geeignet ist, mit dem genannten Greifer (11) in nicht operativer Position, elastisch nachzugeben, um es den genannten Hebelabschnitten (34) zu gestatten, sich voneinander zu entfernen.

12. Entnahmemaschine (1) nach Anspruch 2 und einem beliebigen der Ansprüche 5 bis 11, **dadurch gekennzeichnet, dass** sie mindestens eine Vorrichtung mit festem Nocken (36) umfasst, die auf der genannten festen tragenden Struktur (8) montiert ist und mindestens ein erstes Führungsprofil (37) aufweist, das um die Drehachse (X) des genannten Drehkarussells (9) herum verläuft,
wobei die Bewegungsmittel (15) jedes Entnahmekopfes (10) mindestens einen zweiten Nockenstößel (38) umfassen, der operativ mit der entsprechenden genannten Antriebswelle (22) verbunden ist und sich mit dem ersten Führungsprofil (37) der genannten Vorrichtung mit festem Nocken (36) mindestens dazu im Eingriff befindet, die genannte Antriebswelle (22) von der gelösten Position in die Eingriffsposition zu bringen.

13. Entnahmemaschine (1) nach Anspruch 12, **dadurch gekennzeichnet, dass** die genannten Bewegungsmittel (15) mindestens eine Rückholfeder (39) umfassen, die mechanisch mit der genannten Antriebswelle (22) und der genannten Stützmuffe (21) verbunden ist, die darauf ausgelegt ist, die genannte Antriebswelle (22) in Richtung der genannten gelösten Position zu drücken und geeignet ist, federnd nachzugeben, während der genannte zweite Nockenstößel (38) auf die genannte Antriebswelle (22) wirkt, um diese aus der genannten gelösten Position in Richtung der genannten Eingriffsposition zu schieben.

14. Entnahmemaschine (1) nach einem beliebigen der vorangegangenen Ansprüche, **dadurch gekennzeichnet, dass** der genannte mindestens eine Entnahmekopf (10) mindestens Folgendes umfasst:
- einen beweglichen Stützkörper (55), der einen genannten Greifer (11) montiert trägt und mit der genannten festen tragenden Struktur (8) entlang einer eigenen Bewegungsrichtung (W) zwischen einer erhobenen und einer gesenkten Position verschiebbar verbunden ist;
- Antriebsmittel (40), die mechanisch mit dem genannten beweglichen Stützkörper (55) verbunden und darauf ausgelegt sind, den genannten beweglichen Stützkörper (55) zwischen der genannten erhobenen Position und der genannten gesenkten Position zu bewegen.

15. Entnahmemaschine (1) nach Anspruch 2 und Anspruch 14, **dadurch gekennzeichnet, dass** der bewegliche Stützkörper (55) jedes genannten Entnahmekopfes (10) verschiebbar auf dem genannten Drehkarussell (9) entlang der eigenen genannten Bewegungsrichtung (W) zwischen der genannten erhobenen Position und der genannten gesenkten Position montiert ist, wobei diese Bewegungsrichtung (W) im Wesentlichen parallel zur Drehachse (X) des genannten Drehkarussells (9) ist.

## Revendications

1. Machine d'extraction pour enlever une valve doseuse (2) de récipients, comprenant :
- une structure de support fixe (8) ;
- au moins une tête d'extraction (10) qui est montée sur ladite structure de support fixe (8) et comprend :
- au moins une pince (11), qui comprend :
- un corps de support (12) ;
- deux mâchoires (13), qui sont reliées mécaniquement de manière guidée audit corps de support (12) et comprennent chacune une partie de préhension (14) ;
ladite machine d'extraction étant **caractérisée en ce que** ladite tête d'extraction (10) comprend des moyens de mouvement (15) prédisposés au moins pour déplacer lesdites mâchoires (13) entre une configuration fermée, dans laquelle lesdites parties de préhension (14) sont rapprochées l'une de l'autre pour traverser ladite valve doseuse (2), et une configuration ouverte, dans laquelle lesdites parties de préhension (14) sont éloignées l'une de l'autre pour se mettre en prise mécaniquement avec ladite valve doseuse (2).

2. Machine d'extraction selon la revendication 1, **caractérisée en ce qu'**elle comprend :
- un carrousel rotatif (9) monté de manière rotative sur ladite structure de support fixe (8) autour d'un axe de rotation (X) ;
- une pluralité desdites têtes d'extraction (10), qui sont montées périphériquement sur ledit carrousel rotatif (9) autour dudit axe de rotation (X) pour réaliser un parcours opérationnel autour dudit axe de rotation (X).

3. Machine d'extraction selon la revendication 1 ou 2, **caractérisée en ce que** lesdites mâchoires (14) sont reliées de manière rotative audit corps de support (12), chacune autour d'un propre axe d'articulation (Y) ;
lesdits moyens de mouvement (15) étant prédisposés pour faire tourner lesdites mâchoires (13) entre ladite configuration fermée et ladite configuration ouverte.

4. Machine d'extraction (1) selon l'une quelconque des revendications précédentes, **caractérisée en ce que** les parties de préhension (14) des mâchoires (13) de ladite pince (11) comprennent chacune :
- une tige allongée (16) ;
- une protubérance (19) se développant en faisant saillie de ladite tige allongée (16) pour s'accrocher à ladite valve doseuse (2) avec lesdites mâchoires (13) dans la configuration ouverte et se décrocher de ladite valve doseuse (2) avec lesdites mâchoires (13) dans la configuration fermée.

5. Machine d'extraction (1) selon l'une quelconque des revendications précédentes, **caractérisée en ce que** chaque tête d'extraction (10) comprend au moins un cylindre de support (21) portant ladite pince (11) montée et les moyens de mouvement (15) de ladite tête d'extraction (10) comprennent au moins un arbre d'entraînement (22) associé de manière coulissante audit cylindre de support (21) le long d'une première direction d'entraînement (Z) correspondante et mobile, le long de ladite première direction d'entraînement (Z), entre une position de mise en prise, dans laquelle les mâchoires (13) de ladite pince (11) sont dans la configuration ouverte, et une position de libération, dans laquelle les mâchoires (13) de ladite pince (11) sont dans la configuration fermée.

6. Machine d'extraction (1) selon la revendication 5, **caractérisée en ce que** le cylindre de support (21) de chaque tête d'extraction (10) est pourvu d'au moins un siège de guidage (25), à l'intérieur duquel ladite pince (11) est au moins partiellement logée ;
ladite pince (11) pouvant être entraînée en translation dans ledit siège de guidage (25) par ledit arbre d'entraînement (22) entre une position opérationnelle, avec ledit arbre d'entraînement (22) dans la position de mise en prise, et une position non opérationnelle, avec ledit arbre d'entraînement (22) dans la position de libération.

7. Machine d'extraction (1) selon la revendication 6, **caractérisée en ce que** les moyens de mouvement (15) comprennent au moins un profil de came (26) se développant dans ledit siège de guidage (25) dudit cylindre de support (21) et les mâchoires (13) de ladite pince (11) comprennent chacune un propre premier suiveur de came (27) couplé audit profil de came (26) ;
ledit profil de came (26) étant prédisposé pour commuter, par l'intermédiaire desdits premiers suiveurs de came (27), lesdites mâchoires (13) entre ladite configuration fermée, avec ladite pince (11) disposée dans la position non opérationnelle, et ladite configuration ouverte, avec ladite pince (11) disposée dans la position opérationnelle.

8. Machine d'extraction (1) selon la revendication 7, **caractérisée en ce que** lesdits premiers suiveurs de came (27) se développent latéralement chacun en faisant saillie de la partie de préhension (14) de ladite mâchoire (13) correspondante ;
ledit profil de came (26) comprenant deux premiers tronçons (28) faisant face l'un à l'autre et placés à une première distance et deux deuxièmes tronçons (29) faisant face l'un à l'autre et placés à une deuxième distance plus grande que ladite première distance ;
ladite pince (11) étant disposée entre lesdits premiers tronçons (28) dans la position non opérationnelle, premiers tronçons (28) qui sont susceptibles de retenir, par l'intermédiaire desdits premiers suiveurs de came (27), lesdites mâchoires (13) dans la configuration fermée ;
ladite pince (11) étant disposée entre lesdits deuxièmes tronçons (29) dans la position opérationnelle, deuxièmes tronçons (29) qui sont susceptibles de retenir, par l'intermédiaire desdits premiers suiveurs de came (27), lesdites mâchoires (13) dans ladite configuration ouverte.

9. Machine d'extraction (1) selon la revendication 8, **caractérisée en ce que** lesdits moyens de mouvement (15) comprennent au moins un élément élastique (30) relié auxdites mâchoires (13), prédisposé pour forcer lesdites mâchoires (13) vers ladite configuration ouverte et susceptible de céder élastiquement, avec ladite pince (11) dans la position non opérationnelle, pour permettre auxdites mâchoires (13) de passer de ladite configuration ouverte à ladite configuration fermée.

10. Machine d'extraction (1) selon la revendication 3 et 9, **caractérisée en ce que** les parties de préhension (14) des mâchoires (13) de ladite pince (11) comprennent au moins un tronçon de butée (31) et lesdits moyens de mouvement (15) comprennent au moins un corps pousseur (32) coulissant par rapport audit corps de support (12) entre une position d'interférence, dans laquelle ledit corps pousseur (32) retient, en agissant en butée contre lesdits tronçons de butée (31), lesdites mâchoires (13) tournées dans ladite configuration ouverte, et une position de non-interférence, dans laquelle ledit corps pousseur (32) permet auxdites mâchoires (13) de tourner dans ladite configuration fermée ;
ledit au moins un élément élastique (30) comprenant un ressort de poussée (33), qui est relié mécaniquement au moins audit corps pousseur (32), qui est prédisposé pour forcer ledit corps pousseur (32) vers ladite position d'interférence et est susceptible, avec ladite pince (11) dans la position non opérationnelle, de céder élastiquement sous l'action desdits tronçons de butée (31) pour permettre audit corps pousseur (32) de passer de ladite position d'interférence à ladite position de non-interférence.

11. Machine d'extraction (1) selon la revendication 3 et la revendication 9 ou 10, **caractérisée en ce que** les mâchoires (13) de ladite pince (11) comprennent chacune une partie de levier (34) se développant à partir dudit axe d'articulation (Y) correspondant dans la direction opposée par rapport à ladite partie de préhension (14) correspondante ;
ledit au moins un élément élastique (30) comprenant au moins un anneau élastique (35) placé en connexion avec lesdites parties de levier (34) desdites mâchoires (13), prédisposé pour forcer les parties de levier (34) desdites mâchoires (13) à se rapprocher de façon réciproque afin de porter lesdites mâchoires (13) dans la configuration ouverte et susceptible, avec ladite pince (11) dans la position non opérationnelle, de céder élastiquement pour permettre auxdites parties de levier (34) de s'éloigner l'une de l'autre.

12. Machine d'extraction (1) selon la revendication 2 et l'une quelconque des revendications 5 à 11, **caractérisée en ce qu'**elle comprend au moins un dispositif de came fixe (36) monté sur ladite structure de support fixe (8) et ayant au moins un premier profil de guidage (37) se développant autour de l'axe de rotation (X) dudit carrousel rotatif (9) ; les moyens de mouvement (15) de chaque tête d'extraction (10) comprenant au moins un deuxième suiveur de came (38) relié opérationnellement audit arbre d'entraînement (22) correspondant et mis en prise avec le premier profil de guidage (37) dudit dispositif de came fixe (36) au moins pour porter ledit arbre d'entraînement (22) de la position de libération à la position de mise en prise.

13. Machine d'extraction (1) selon la revendication 12, **caractérisée en ce que** lesdits moyens de mouvement (15) comprennent au moins un ressort de rappel (39) relié mécaniquement audit arbre d'entraînement (22) et audit cylindre de support (21), prédisposé pour forcer ledit arbre d'entraînement (22) vers ladite position de libération et susceptible de céder élastiquement avec ledit deuxième suiveur de came (38) agissant sur ledit arbre d'entraînement (22) pour le pousser de ladite position de libération vers ladite position de mise en prise.

14. Machine d'extraction (1) selon l'une quelconque des revendications précédentes, **caractérisée en ce que** ladite au moins une tête d'extraction (10) comprend au moins :
- un corps de support mobile (55), qui porte une pince (11) montée et est associé de manière coulissante à ladite structure de support fixe (8) le long d'une propre direction de mouvement (W) entre une position soulevée et une position abaissée ;
- des moyens d' actionnement (40) reliés mécaniquement audit corps de support mobile (55) et prédisposés pour mouvoir ledit corps de support mobile (55) entre ladite position soulevée et ladite position abaissée.

15. Machine d'extraction (1) selon la revendication 2 et la revendication 14, **caractérisée en ce que** ledit corps de support mobile (55) de chaque tête d'extraction (10) est monté de manière coulissante sur le carrousel rotatif (9) le long de ladite propre direction de mouvement (W) entre ladite position soulevée et ladite position abaissée, direction de mouvement (W) qui est sensiblement parallèle à l' axe de rotation (X) dudit carrousel rotatif (9).
